(19)

**Europäisches Patentamt**
**European Patent Office**
**Office européen des brevets**

(11) **EP 4 563 733 A1**

(12) **EUROPEAN PATENT APPLICATION**

(43) Date of publication:
**04.06.2025 Bulletin 2025/23**

(21) Application number: **24216077.8**

(22) Date of filing: **28.11.2024**

(51) International Patent Classification (IPC):
**D01D 5/06** (2006.01)     **D01F 6/18** (2006.01)
**D01F 6/38** (2006.01)     **D01F 9/22** (2006.01)

(52) Cooperative Patent Classification (CPC):
**D01F 9/22; D01D 5/06; D01F 6/18; D01F 6/38;
D01F 9/225**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.11.2023 IT 202300025554**

(71) Applicant: **Montefibre Mae Technologies S.R.L.
20145 Milano (IT)**

(72) Inventors:
• **FRANCALANCI, Franco
  51010 Uzzano (PT) (IT)**
• **CASSI, Giulia
  29010 Alseno (PC) (IT)**
• **CORREIA, Paulo
  2830-095 Barreiro, Portugal (PT)**
• **VIDIGAL, Ana Paula
  1600-759 Lisbon (PT)**

(74) Representative: **De Gregori, Antonella et al
BIRD & BIRD SOCIETA TRA AVVOCATI S.R.L.
Via Porlezza, 12
20123 Milano (IT)**

(54) **IMPROVED PROCESS FOR THE PREPARATION OF A SPINNING SOLUTION FOR THE PRODUCTION OF ACRYLIC FIBER PRECURSORS OF CARBON FIBERS AND FOR THE PREPARATION OF THE RELATIVE CARBON FIBERS**

(57)     An optimized process for the preparation of a spinning solution for the production of acrylic fiber precursors (PAN) of carbon fibers and an optimized process for the production of carbon fibers from said acrylic precursor (PAN), are described.

**EP 4 563 733 A1**

**Description**

The present invention relates to an improved process for the preparation of a spinning solution for the production of acrylic fiber precursors (PAN) of carbon fibers and an improved process for the production of carbon fibers from said acrylic precursor. (PAN).

More specifically, the present invention falls within the sector relating to the production of carbon fibers, whose preparation process has been known for many years and which, in most cases, is based on the heat treatment of a suitable acrylic precursor (PAN), having a chemical composition suitable for allowing a gradual elimination of the heteroatoms, in a controlled manner..

This gradual elimination of heteroatoms is obtained thanks to the presence in the polymeric chain of the precursor of specific co-monomers having groups that allow the heat developed during the oxidation/stabilization treatment to be distributed over relatively long times, avoiding sudden exothermic peaks that, in addition to providing poor-quality carbon fibers, would cause exposure to the risk of uncontrolled combustion during the heating phase. The most commonly used co-monomers for this purpose are vinyl acids, mono or dicarboxylic. In particular, acrylic acid, methacrylic acid or itaconic acid are used in quantities generally ranging from 0.5 to 5% by weight with respect to the total weight of the monomers fed to the polymerization reactor. The other reagents are mainly acrylonitrile (95 - 99.5% by weight) and, optionally, a third component generally selected from methyl acrylate, vinyl acetate and acrylamide (0 - 3.0% by weight).

PAN precursors can be prepared by means of different processes starting from the co-monomers selected. The state of the art can be divided and schematized as follows:

A. Discontinuous processes (two-step).

In two-step discontinuous processes, the polymer is generally produced in aqueous suspension, isolated and subsequently dissolved in a suitable solvent to be spun and transformed into precursor fiber of carbon fiber. The solvents most commonly used for the preparation of the spinning solution are: dimethylacetamide (DMAC), dimethylformamide (DMF), an aqueous solution of sodium thiocyanate (NaSCN). A process using DMSO as solvent has also been described (US 9,296,889).

B. Continuous Processes (one-step)

In continuous processes, on the other hand, the polymerization takes place in a solvent and the solution thus obtained is directly used in spinning without the intermediate isolation of the polymer. The solvents most commonly used in these processes are: dimethylformamide (DMF), dimethylsulfoxide (DMSO), an aqueous solution of zinc chloride ($ZnCl_2$) and an aqueous solution of sodium thiocyanate (NaSCN).

By means of these processes, well-known to skilled persons in the field, various types of carbon fiber with standard characteristics of toughness and elastic modulus can be easily obtained. In order to improve the performance of the fibers produced, however, some modifications to these methods have been proposed..

One of the most significant modifications relates to the use of nitrogenous compounds in the production process of the PAN precursor, in particular the use of low-molecular-weight primary and secondary amines and, above all, ammonia.

In particular, US patents 5,804,108, US 6,054,214 and patent application US 2009/0224420 A1 describe a method for increasing the elastic modulus of the carbon fibers produced up to 2.5 times.

In this process the PAN precursor containing itaconic acid is treated with amines or ammonia during the spinning step. In particular, the PAN fiber, immediately after the coagulation phase at the outlet of the spinneret, is treated in an aqueous bath containing amines or ammonia and subsequently, after the spinning has been completed, the fiber is treated at temperatures ranging from 240°C to 260°C for 12-15 minutes, before being subjected to carbonization.

In other patents such as JPH1112856A, US 8,137,810 and US 8,674,045 the use of gaseous ammonia directly in the spinning solution (dope) is claimed. In these cases the use of ammonia is mainly motivated by the neutralization of the acid groups carried by the co-monomers used (mainly itaconic acid and acrylic acid). The salification of the acid groups with ammonia to give ammonium carboxylates can allow an improved production process of the PAN precursor, facilitating the coagulation phase thanks to the greater hydrophilicity of the polymer chain after salification of the acid chain-ends and their transformation into ammonium salts.

Furthermore, in EP 2,894,243 (US 9,296,889) a process for the preparation of carbon fiber precursors has been described wherein an acrylic polymer containing itaconic acid or acrylic acid is dissolved under particular conditions, namely in a DMSO/water mixture in a ratio ranging from 94.5/5.5 to 97/3% w/w. The use of this process has allowed ammonia or primary or secondary amines to be introduced directly into an aqueous solution during the formation phase of the spinning solution as described in US 11,313,053

The use of ammonia or primary or secondary amines contributes to the production of carbon fibers having an improved quality compared to those that can be obtained in the absence of ammonia or amines. A further advantage lies in the reduction of the heat treatment times necessary for reaching a fiber density of at least 1.35-1.43 g/cc, this density being necessary for feeding the oxidized product to the carbonization furnaces. This reduction in the stabilization time offers significant advantages both in terms of energy consumption and in terms of investment in the construction of stabilization furnaces.

A reaction mechanism can be assumed wherein itaconic acid is salified with amines or ammonia. These ammonium salts after heat treatment are transformed into amides and finally cause the cross-linking of the PAN fiber by attacking the nitrile groups present in the polymer chain.

Reducing the stabilization times is also the objective of CN 111910291A. In this case, a treatment of the fiber precursor in the form of a tow is provided by immersion in a bath containing an aqueous solutions of ammonium polyphosphate or hydrazine hydrate followed by a pre-oxidation step at temperatures ranging from 190 to 320°C. Although a reduction in the overall oxidation/stabilization time is claimed, there are various contraindications, such as the difficulty in obtaining a homogeneous impregnation of the entire tow with a relative poor repeatability of the performances and different behaviour in relation to the treatment itself. The authors themselves preferentially recommend using tows up to 24K in order to minimize this phenomenon. It can also be assumed that foreign material (residues of phosphorous compounds) remain in the final carbon fiber, giving it poor toughness characteristics. A toughness in the order of 2.8 GPa is in fact indicated, which is insufficient for most applications..

The objective of the present invention is therefore to overcome the limitations of the known art and identify an improved process for the preparation of a spinning solution for the production of acrylic fiber precursors (PAN) of carbon fibers and, in particular, an improved process for the production of carbon fibers from said acrylic precursor (PAN) which allows a reduction in the production costs and carbon fibers with particularly high toughness and elastic modulus characteristics to be obtained.

Detailed description of the invention

The present invention therefore relates to a process for the preparation of a homogeneous spinning solution for the production of acrylic fiber precursors (PAN) of carbon fibers wherein the solvent used is a mixture of DMSO or DMAC and an aqueous solution of a primary or secondary diamine selected from the group represented by general formula (1):

$$RHN - (CHR'' - CH_2)_n - NHR' \qquad\qquad (1)$$

wherein R, R' and R", the same as or different from each other, can be hydrogen or an alkyl group having from 1 to 10 carbon atoms and n is equal to 0 or is an integer ranging from 1 to 6; when n = 0, at least one of R and R' must be different from hydrogen.

Thanks to the homogeneous impregnation, the diamine facilitates the start of the cross-linking reaction and, it is supposed, accelerates the subsequent thermal stabilization step (also called oxidation) preparatory to the carbonization step in the production of carbon fiber from PAN precursors .

The process object of the present invention comprises the following steps:

i) preparation of a homogeneous suspension by mixing an acrylonitrile copolymer in powder form with a solvent consisting of

- a mixture containing DMSO in a quantity ranging from 90 to 99% by weight, preferably from 93 to 98% and an aqueous solution of a primary or secondary diamine selected from the group represented by general formula (1):

$$RHN - (CHR'' - CH_2)_n - NHR' \qquad\qquad (1)$$

wherein R, R' and R", the same as or different from each other, can be hydrogen or an alkyl group having from 1 to 10 carbon atoms and n is equal to 0 or is an integer ranging from 1 to 6; when n = 0, at least one of R and R' being different from hydrogen; said diamine being in a quantity by weight ranging from 0.1 to 5.0%, preferably from 0.5 to 2.5% with respect to the total weight of the solvent; or

- a mixture containing DMAC in a quantity ranging from 95 to 99% by weight, preferably from 96 to 98% and an aqueous solution of said diamine having general formula (1) in a quantity by weight ranging from 0.1 to 5%, preferably from 0.5 to 3% with respect to the total weight of the solvent,

said mixing being carried out for a time ranging from 5 to 30 minutes, by spraying a stream of the solvent DMSO or DMAC/aqueous solution of diamine having general formula (1) onto a stream of acrylonitrile copolymer powder, disintegrated and premixed;

ii) heating the homogeneous suspension coming from step i) to a temperature ranging from 70 to 150°C for a time ranging from 0.5 to 30 minutes, until the complete dissolution of the copolymer and the formation of a homogeneous solution.

The solvent therefore consists of a mixture containing DMSO or DMAC and an aqueous solution of diamine having general formula (1).

The aqueous solution of diamine having general formula (1) contains from 0.1 to 5% by weight of the nitrogenous substance, preferably from 0.5 to 3% by weight, with respect to the total weight of the solution.

The aqueous solution is preferably an aqueous solution of ethylenediamine (R, R' and R" = H and n=1 in formula (1)), of hexamethylenediamine (R, R' and R" = H and n = 3 in formula (1)), or of 1,2-diaminopropane - DAP (R = R' = H, R"= $CH_3$ and n=1 in formula (1)), even more preferably it is an aqueous solution of 1,2-diaminopropane.

The polymer to be used in the process object of the present invention is a high-molecular-weight copolymer, which is within the range of 100,000-300,000 Da (number molecular weight), prevalently composed of acrylonitrile, in a quantity ranging from 90 to 99% by weight with respect to the total weight of the polymer, and one or more co-monomers in a quantity ranging from 1 to 10% by weight with respect to the total weight of the polymer.

Preferred co-monomers are vinyl molecules bearing one or more acid groups such as acrylic acid, methacrylic acid, itaconic acid and the like, preferably itaconic acid. The copolymer can optionally also contain a third co-monomer selected from neutral vinyl molecules such as methyl acrylate, methyl methacrylate, vinyl acetate, acrylamide and the like.

The homogeneous spinning solution obtained at the end of the process according to the present invention is free from gel and undissolved residues and can be fed directly to the spinning line (apparatus) or to a storage tank.

The formation of a good spinning solution free from gels and undissolved material is therefore achieved by means of a step i) for the preparation of a homogeneous slurry under conditions of non-solubility of the polymer and a step ii) for the subsequent rapid heating of the slurry thus obtained.

The condition of non-solubility of the polymer in the case of DMSO is obtained by adding water to the DMSO, present in the aqueous solution of the diamine having general formula (1). In the case of DMAC the condition of non-solubility is achieved by maintaining the temperature at values ranging from 0 to -10 °C.

The main advantage of the process for the preparation of PAN precursors according to the present invention is that it allows the preparation of a homogeneous suspension of the polymer in the aqueous DMSO solvent or in DMAC. Under these conditions the solvent is in fact able to penetrate inside each polymer granule without causing its partial dissolution with the consequent formation of a surface film of dope that would prevent a homogeneous imbibition of all the polymeric material.

By rapidly heating the suspension homogeneously impregnated by the solvent, a high-quality dope is obtained, suitable for the preparation of high-quality and high-performance carbon fiber, according to a conventional production technique..

The effectiveness of the presence of the diamine having general formula (1) in promoting the oxidation process, in particular in allowing a reduction in the oxidation times, is evident by comparing the thermal release curves using the DSC (Differential Scanning Calorimetry) technique conducted on a sample of polymer solution obtained with the process according to the present invention compared with a polymer solution having the same chemical composition, without any modification and with a polymer solution having a chemical composition modified by the addition of ammonia.

As indicated in the following table 1, the peak temperatures (Peak T) and the start of the exothermic curve (Onset T) are significantly influenced by the modifications made to the polymer. In the polymer modified with ammonia (line 2), a decrease of about 3°C is observed in both the peak temperature and the onset temperature. A similar result is observed with the use of phenylhydrazine. The use of hydrazine, on the other hand, causes a clear increase in temperatures, but above all, there is a complete gelation of the solution just prepared, thus making hydrazine inapplicable in the process according to the present invention, and not obtaining the advantages deriving from the present invention.

The peak temperatures (Peak T) and the start of the exothermic curve (Onset T) simply indicate an improved reactivity in the stabilization/oxidation step which allows the same result to be obtained (indicated by the measurement of the density of the oxidized fiber) in shorter times or with lower temperatures.

The solution according to the present invention which provides for the use of diamines having general formula (1) according to the present invention, and preferably aliphatic diamines having general formula (1) wherein R, R' and R" are equal to H and n=1 (ethylenediamine - line 5) or n=3 (hexamethylenediamine - line 4) or R and R' = H, R" = $CH_3$ and n=1 (1,2 diaminopropane - line 6) surprisingly does not show any tendency towards the gelation of the solution and the values of both the peak and onset temperature are lower than those of the sample modified with ammonia or phenylhydrazine.

Table 1 - DSC curves of fiber samples

| Example | Chemical modification | DSC Peak T (°C) (Air, 20 °C/min) | DSC Onset T (°C) (Air, 20 °C/min) | Dope viscosity 60 °C (P) |
|---|---|---|---|---|
| 1. Comparative | None | 304.16 | 283.03 | 449 |
| 2. Comparative | $NH_3$ | 301.50 | 280.46 | 535 |
| 3. Comparative | $C_6H_5NHNH_2$ | 302.50 | 277.69 | 450 |
| 4. | $NH_2(CH_2)_6NH_2$ | 301.66 | 279.77 | 515 |
| 5. | $NH_2(CH_2)_2NH_2$ | 299.16 | 276.33 | 514 |
| 6. | $NH_2CH(CH_3)CH_2NH_2$ | 298.26 | 274.56 | 401 |

The viscosity of the dope is measured with a Haake Viscotester iQ rotational viscometer, HAAKE VTiQ-T controller, CC25 DIN/Ti rotor.

The improvement in the stabilization/oxidation rate, suggested by the comparison of the thermal curves of the samples treated with diamines having general formula (1), is further confirmed by the experimental data of the stabilization/oxidation treatment effected on the fibers obtained using different samples of chemically modified polymer as described in the present invention. The results of the stabilization/oxidation tests are indicated in the following examples 4-6.

The present invention also relates to a process for the production of carbon fibers wherein the homogeneous solution obtained as described above is subjected to the following further steps:

iii) spinning the homogeneous solution from step ii) and obtaining a tow containing from 500 (0.5 K) to 400,000 (400 K) single filaments, preferably from 1,000 (1K) to 50,000 (50K) single filaments;
iv) feeding the tow coming from step iii) to the stabilization or oxidation step, said oxidation being carried out for a time ranging from 40 to 55 minutes, at a temperature ranging from 240 to 260°C;
v) feeding the oxidized tow coming from step iv) to a carbonization step with a maximum temperature of 1,600°C.

The stabilization process, also called oxidation, provides for the treatment of the PAN precursor, in the form of a tow containing variable quantities of single filaments depending on the type of carbon fiber desired. Tows can be used containing from 500 (0.5 K) to 400,000 (400 K) single filaments, preferably using tows containing from 1,000 (1K) to 50,000 (50K) single filaments. The tow coming from spinning can be collected on bobbins or in boxes or crates from which it can then be easily removed and fed to the stabilization section.

A further advantage of the process according to the present invention is that the acrylic precursors or PAN precursors thus obtained can be stabilized faster and at a lower temperature in the stabilization/oxidation step preceding the final carbonization step with the production of carbon fiber.

Examples

Some examples for the implementation of the process according to the present invention and some comparative examples are provided hereunder for illustrative but non-limiting purposes of the present invention.

Example 1 (Comparative - No additive)

Dissolution of a high-molecular-weight acrylic copolymer (MW=150,000-180,000) consisting of acrylonitrile (96% by weight with respect to the total weight of the polymer), itaconic acid (1% by weight with respect to the total weight of the polymer) and methyl acrylate (3% by weight with respect to the total weight of the polymer).

The polymer was dispersed in a 95/5 DMSO/Water solution kept at a temperature of 5°C until a polymer concentration in the solvent equal to 18.0% by weight with respect to the total weight of the mixture, had been reached.

The dissolution of the polymer in the solvent solution was carried out in an industrial line for the production of an acrylic polymer spinning solution. After heating the dispersion by means of a tube-bundle exchanger to a temperature of 88°C for a time of 90 seconds, a homogeneous dope was obtained with a viscosity of 449 poises at 60°C.

The polymer-solvent solution thus obtained was fed to a carbon-fiber-precursor spinning line.

During the spinning process, the spinnerets, immersed in a coagulation bath composed of a mixture of water and DMSO, generated a perfectly round, compact, crack-free fiber. The fiber thus obtained was subjected to washing with deionized water to remove the residual solvent, stretched in several stages in boiling water for about 10 times its initial length, dried on hot rollers and collected on bobbins. The tows obtained are composed of fibers with a diameter of about 12 microns, an average toughness of 56 cN/Tex and an ultimate elongation of about 17%, measured on an Instron 5542 dynamometer with a 10N cell according to the method ASTM D-3822-2007.

The precursor tow thus obtained was treated in an oxidation oven for 90 minutes with a temperature gradient from 240 to 270°C, providing at the end an oxidized fiber having a density of 1.39 g/cc. The oxidized fiber was subsequently fed to a carbonization section with a maximum temperature of 1,600°C, providing a carbon fiber having a toughness equal to 4.60 GPa and an elastic modulus equal to 245 GPa.

Example 2 (Comparative with ammonia)

Dissolution of a high-molecular-weight acrylic copolymer (MW=150,000-180,000) consisting of acrylonitrile (96% by weight with respect to the total weight of the polymer), itaconic acid (1% by weight with respect to the total weight of the polymer) and methyl acrylate (3% by weight with respect to the total weight of the polymer).

The polymer was transformed into dope as described in Example 1, but using as solvent medium a mixture of DMSO (95% by weight) and 5% by weight of an aqueous solution of ammonia at 0.6% by weight, until a polymer concentration in the solvent equal to 18.0% by weight with respect to the weight of the mixture, had been reached. The slurry was prepared at a temperature of 5°C and the spinning dope was obtained by subsequent heating to 88°C, for a time of 90 seconds, obtaining a homogeneous dope having a viscosity of 535 poises at 60°C.

The polymer-solvent solution thus obtained was fed to a carbon-fiber-precursor spinning line.

During the spinning process, the spinnerets, immersed in a coagulation bath composed of a mixture of water and DMSO, generated a perfectly round, compact, crack-free fiber. The fiber thus obtained was subjected to washing with deionized water to remove the residual solvent, stretched in several stages in boiling water for about 10 times its initial length, dried on hot rollers and collected on bobbins. The tows obtained are composed of fibers with a diameter of about 12 microns, an average toughness of 58 cN/Tex and an ultimate elongation of about 18%, measured on an Instron 5542 dynamometer with a 10N cell according to the method ASTM D-3822-2007.

The precursor tow thus obtained was treated in an oxidation oven for 60 minutes with a temperature gradient from 240 to 260°C, providing at the end an oxidized fiber having a density of 1.43 g/cc. The oxidized fiber was subsequently fed to a carbonization section with a maximum temperature of 1,600°C, providing a carbon fiber having a toughness equal to 5.20 GPa and an elastic modulus equal to 288 GPa.

Example 3 - (Comparative with phenylhydrazine)

Dissolution of a high-molecular-weight acrylic copolymer (MW=150,000-180,000) consisting of acrylonitrile (96% by weight with respect to the total weight of the polymer), itaconic acid (1% by weight with respect to the total weight of the polymer) and methyl acrylate (3% by weight with respect to the total weight of the polymer).

The polymer was transformed into dope as described in Example 1, using however as solvent medium a mixture consisting of DMSO (95% by weight) and 5% by weight of an aqueous solution of phenylhydrazine at 1.8% by weight, until a polymer concentration in the solvent equal to 18% by weight with respect to the weight of the mixture, had been reached. The slurry was prepared at a temperature of 5°C and the spinning dope was obtained by subsequent heating to 88°C, for a time of 90 seconds, obtaining a homogeneous dope having a viscosity of 450 poises at 60°C.

The polymer-solvent solution thus obtained was fed to a carbon-fiber-precursor spinning line.

During the spinning process, the spinnerets, immersed in a coagulation bath composed of a mixture of water and DMSO, generated a perfectly round, compact, crack-free fiber. The fiber thus obtained was subjected to washing with deionized water to remove the residual solvent, stretched in several stages in boiling water for about 10 times its initial length, dried on hot rollers and collected on bobbins. The tows obtained are composed of fibers with a diameter of about 12 microns, an average toughness of 61 cN/Tex and an ultimate elongation of about 18%, measured on an Instron 5542 dynamometer with a 10N cell according to the method ASTM D-3822-2007.

The precursor tow thus obtained was treated in an oxidation oven for 60 minutes with a temperature gradient from 240 to 260°C, providing at the end an oxidized fiber having a density of 1.43 g/cc. The oxidized fiber was subsequently fed to a carbonization section with a maximum temperature of 1,600°C, providing a carbon fiber having a toughness equal to 5.05 GPa and an elastic modulus equal to 278 GPa.

Example 4 - Hexamethylenediamine

Dissolution of a high-molecular-weight acrylic copolymer (MW=180,000-200,000) consisting of acrylonitrile (97% by weight with respect to the total weight of the polymer) and itaconic acid (3% by weight with respect to the total weight of the polymer).

The polymer was transformed into dope as described in Example 1, but using as solvent medium a mixture of DMSO (95% by weight) and 5% by weight of a 2% aqueous solution of hexamethylenediamine until a polymer concentration in the solvent of 18% by weight with respect to the weight of the mixture had been reached. The slurry was prepared at a temperature of 4°C and the spinning dope was obtained by heating to 88°C for a time of 90 seconds, obtaining a homogeneous dope having a viscosity of 515 poises at 60°C.

The polymer-solvent solution thus obtained was fed to a carbon-fiber-precursor spinning line.

During the spinning process, the spinnerets, immersed in a coagulation bath composed of a mixture of water and DMSO, generated a perfectly round, compact, crack-free fiber. The fiber thus obtained was subjected to washing with deionized water to remove the residual solvent, stretched in several stages in boiling water for about 10 times its initial length, dried on hot rollers and collected on bobbins. The tows obtained are composed of fibers with a diameter of about 12 microns, an average toughness of 62 cN/Tex and an ultimate elongation of about 16%, measured on an Instron 5542 dynamometer with a 10N cell according to the method ASTM D-3822-2007.

The precursor tow thus obtained was treated in an oxidation oven for 40 minutes with a temperature gradient from 240 to 260°C providing at the end an oxidized fiber having a density of 1.40 g/cc. The oxidized fiber was subsequently fed to a carbonization section with a maximum temperature of 1600 °C providing a carbon fiber having a toughness equal to 5.14 GPa and an elastic modulus equal to 265 GPa.

Example 5 - Ethylenediamine

Dissolution of a high-molecular-weight acrylic copolymer (MW=150,000-180,000) consisting of acrylonitrile (96% by weight with respect to the total weight of the polymer), itaconic acid (1% by weight with respect to the total weight of the polymer) and methyl acrylate (3% by weight with respect to the total weight of the polymer).

The polymer was transformed into dope as described in Example 1, using however as solvent medium a mixture consisting of DMSO (95% by weight) and 5% by weight of an aqueous solution of ethylenediamine at 1% by weight, until a polymer concentration in the solvent equal to 18% by weight with respect to the weight of the mixture, had been reached. The slurry was prepared at a temperature of 5°C and the spinning dope was obtained by subsequent heating to 88°C, for a time of 90 seconds, obtaining a homogeneous dope having a viscosity of 514 poises at 60°C.

The polymer-solvent solution thus obtained was fed to a carbon-fiber-precursor spinning line.

During the spinning process, the spinnerets, immersed in a coagulation bath composed of a mixture of water and DMSO, generated a perfectly round, compact, crack-free fiber. The fiber thus obtained was subjected to washing with deionized water to remove the residual solvent, stretched in several stages in boiling water for about 10 times its initial length, dried on hot rollers and collected on bobbins. The tows obtained are composed of fibers with a diameter of about 12 microns, an average toughness of 67 cN/Tex and an ultimate elongation of about 17%, measured on an Instron 5542 dynamometer with a 10N cell according to the method ASTM D-3822-2007.

The precursor tow thus obtained was treated in an oxidation oven for 40 minutes with a temperature gradient from 240 to 260°C, providing at the end an oxidized fiber having a density of 1.41 g/cc. The oxidized fiber was subsequently fed to a carbonization section with a maximum temperature of 1,600°C, providing a carbon fiber having a toughness equal to 5.02 GPa and an elastic modulus equal to 257 GPa.

Example 6 - 1,2-diaminopropane

Dissolution of a high-molecular-weight acrylic copolymer (MW=150,000-180,000) consisting of acrylonitrile (96% by weight with respect to the total weight of the polymer), itaconic acid (1% by weight with respect to the total weight of the polymer) and methyl acrylate (3% by weight with respect to the total weight of the polymer).

The polymer was transformed into dope as described in Example 1, but using as solvent medium a mixture of DMSO (95% by weight) and 5% by weight of an aqueous solution of 1,2-diaminopropane at 1.25% by weight, until a polymer concentration in the solvent equal to 18% by weight with respect to the total weight of the mixture, had been reached. The slurry was prepared at a temperature of 5°C and the spinning dope was obtained by subsequent heating to 88°C, for a time of 90 seconds, obtaining a homogeneous dope having a viscosity of 401 poises at 60°C.

The polymer-solvent solution thus obtained was fed to a carbon-fiber-precursor spinning line.

During the spinning process, the spinnerets, immersed in a coagulation bath composed of a mixture of water and DMSO, generated a perfectly round, compact, crack-free fiber. The fiber thus obtained was subjected to washing with deionized water to remove the residual solvent, stretched in several stages in boiling water for about 10 times its initial length, dried on hot rollers and collected on bobbins. The tows obtained are composed of fibers with a diameter of about 12 microns, an average toughness of 64 cN/Tex and an ultimate elongation of about 16%, measured on an Instron 5542 dynamometer with a 10N cell according to the method ASTM D-3822-2007.

The precursor tow thus obtained was treated in an oxidation oven for 40 minutes with a temperature gradient from 240 to 260°C, providing at the end an oxidized fiber having a density of 1.43 g/cc. The oxidized fiber was subsequently fed to a carbonization section with a maximum temperature of 1,600°C, providing a carbon fiber having a toughness equal to 5.12 GPa and an elastic modulus equal to 265 GPa.

In the following Table 2 the toughness and elastic modulus values of the carbon fibers obtained in Examples 1-6 are indicated.

Table 2

| Example | Chemical modification | Toughness (GPa) ASTM D-4018-99 | Elastic modulus (GPa) ASTM D-4018-99 | Dope viscosity 60 °C (P) |
|---|---|---|---|---|
| 1. Comparative | None | 4.60 | 245 | 449 |
| 2. Comparative | $NH_3$ | 5.20 | 288 | 535 |
| 3. Comparative | $C_6H_5NHNH_2$ | 5.05 | 278 | 450 |
| 4. | $NH_2(CH_2)_6NH_2$ | 5.14 | 265 | 515 |
| 5. | $NH_2(CH_2)_2NH_2$ | 5.02 | 257 | 514 |
| 6. | $NH_2CH(CH_3)CH_2NH_2$ | 5.12 | 265 | 401 |

The carbon fibers obtained in Examples 4-6 according to the present invention show particularly high toughness and elastic modulus values compared to the sample of comparison Example 1, where the polymer has not been modified. These values are substantially and surprisingly comparable with those obtained in comparative Example 2 (polymer modified with ammonia) and in comparative Example 3 (polymer modified with phenylhydrazine) with respect to which, however, there are clear improvements in the stabilization/oxidation rate as shown in Table 1.

**Claims**

1.  A process for the preparation of a homogeneous spinning solution for the production of acrylic fiber precursors (PAN) of carbon fibers wherein the solvent used is a mixture of DMSO or DMAC and an aqueous solution of a primary or secondary diamine selected from the group represented by general formula (1):

$$RHN - (CHR'' - CH_2)_n - NHR' \qquad (1)$$

    wherein R, R' and R", the same as or different from each other, can be hydrogen or an alkyl group having from 1 to 10 carbon atoms and n is equal to 0 or is an integer from 1 to 6; when n = 0, at least one of R and R' being different from hydrogen.

2.  The process according to claim 1, **characterized in that** it comprises the following steps:

    i) preparation of a homogeneous suspension by mixing an acrylonitrile copolymer in powder form with a solvent consisting of

    - a mixture containing DMSO in a quantity ranging from 90 to 99% by weight, preferably from 93 to 98% and an aqueous solution of a primary or secondary diamine selected from the group represented by the above-mentioned general formula (1), said diamine being in a quantity by weight ranging from 0.1 to 5.0%, preferably from 0.5 to 2.5% with respect to the total weight of the solvent; or
    - a mixture containing DMAC in a quantity ranging from 95 to 99% by weight, preferably from 96 to 98% and an aqueous solution of said diamine having general formula (1) in a quantity by weight ranging from 0.1 to 5%, preferably from 0.5 to 3% with respect to the total weight of the solvent;
    said mixing being carried out for a time ranging from 5 to 30 minutes, by spraying a stream of the solvent DMSO or DMAC/aqueous solution of diamine having general formula (1) onto a stream of acrylonitrile copolymer powder, disintegrated and premixed;

    ii) heating the homogeneous suspension coming from step i) to a temperature ranging from 70 to 150°C for a time ranging from 0.5 to 30 minutes, until the complete dissolution of the copolymer and the formation of a homogeneous solution.

3. The process according to one or more of the previous claims, wherein the aqueous solution of diamine having general formula (1) contains from 0.1 to 5% by weight of the nitrogenous substance, preferably from 0.5 to 3% by weight, with respect to the total weight of the solution.

4. The process according to one or more of the previous claims, wherein the aqueous solution of diamine having general formula (1) is an aqueous solution of ethylenediamine (R, R' and R" = H and n=1 in formula (1)), hexamethylenediamine (R, R' and R" = H and n = 3 in formula (1)), or 1,2-diaminopropane - DAP (R = R' = H, R"= $CH_3$ and n=1 in formula (1)).

5. The process according to one or more of the previous claims, wherein the diamine is 1,2-diaminopropane.

6. The process according to one or more of the previous claims, wherein the copolymer is a copolymer with a high number molecular weight, which is within the range of 100,000-300,000 Da, composed of acrylonitrile, in a quantity ranging from 90 to 99% by weight with respect to the total weight of the polymer, and one or more co-monomers in a quantity ranging from 1 to 10% by weight with respect to the total weight of the polymer.

7. The process according to claim 5, wherein the comonomers are vinyl molecules bearing one or more acid groups selected from acrylic acid, methacrylic acid, itaconic acid, preferably itaconic acid.

8. The process according to one or more of the previous claims, wherein the copolymer also comprises a third co-monomer selected from neutral vinyl molecules such as methyl acrylate, methyl methacrylate, vinyl acetate, acrylamide, and the like.

9. A homogeneous spinning solution for the production of acrylic fiber precursors of carbon fibers that can be obtained with the process according to any of claims 1 to 8.

10. A process for the production of carbon fibers, wherein the homogeneous solution obtained at the end of step ii) of the process according to claims 2-9, is subjected to the following further steps:

iii) spinning the homogeneous solution coming from step ii) and obtaining a tow containing from 500 (0.5 K) to 400,000 (400 K) single filaments, preferably from 1,000 (1K) to 50,000 (50K) single filaments;
iv) feeding the tow coming from step iii) to the stabilization or oxidation step, said oxidation being carried out for a time ranging from 40 to 55 minutes, at a temperature ranging from 240 to 260°C;
v) feeding the oxidized tow coming from step iv) to a carbonization step with a maximum temperature of 1,600°C.

Europäisches
Patentamt

European
Patent Office

Office européen
des brevets

# EUROPEAN SEARCH REPORT

**Application Number**

EP 24 21 6077

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/054539 A1 (FRANCALANCI FRANCO [IT]) 25 February 2021 (2021-02-25) | 1-3,6-10 | INV. D01D5/06 |
| Y | * examples 3-4 * | 4,5 | D01F6/18 D01F6/38 |
| Y | US 2002/009588 A1 (MATSUHISA YOJI [JP] ET AL) 24 January 2002 (2002-01-24) | 4,5 | D01F9/22 |
| A | * paragraph [0257] * | 1-3,6-10 | |

-----

-----

TECHNICAL FIELDS
SEARCHED    (IPC)

D01D
D01F

The present search report has been drawn up for all claims

| Place of search | Date of completion of the search | Examiner |
|---|---|---|
| The Hague | 15 January 2025 | Massella, Daniele |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.......................................................................................
& : member of the same patent family, corresponding
   document

EPO FORM 1503 03.82 (P04C01)

**EP 4 563 733 A1**

## ANNEX TO THE EUROPEAN SEARCH REPORT
## ON EUROPEAN PATENT APPLICATION NO.

EP 24 21 6077

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2025

| Patent document cited in search report | Publication date | Patent family member(s) | Publication date |
|---|---|---|---|
| US 2021054539 A1 | 25-02-2021 | AU 2020217375 A1 | 11-03-2021 |
| | | BR 102020016826 A2 | 02-03-2021 |
| | | CN 112410891 A | 26-02-2021 |
| | | EP 3783132 A1 | 24-02-2021 |
| | | JP 7600484 B2 | 17-12-2024 |
| | | JP 2021031831 A | 01-03-2021 |
| | | KR 20210023740 A | 04-03-2021 |
| | | RU 2020127346 A | 17-02-2022 |
| | | US 2021054539 A1 | 25-02-2021 |
| US 2002009588 A1 | 24-01-2002 | DE 69720650 D1 | 15-05-2003 |
| | | DE 69720650 T2 | 30-10-2003 |
| | | EP 0843033 A1 | 20-05-1998 |
| | | JP 4094670 B2 | 04-06-2008 |
| | | KR 19990035887 A | 25-05-1999 |
| | | TW 459075 B | 11-10-2001 |
| | | US 6103211 A | 15-08-2000 |
| | | US 6221490 B1 | 24-04-2001 |
| | | US 2001024722 A1 | 27-09-2001 |
| | | US 2002009588 A1 | 24-01-2002 |
| | | WO 9745576 A1 | 04-12-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9296889 B
- US 5804108 A
- US 6054214 A
- US 20090224420 A1
- JP H1112856 A
- US 8137810 B
- US 8674045 B
- EP 2894243 A
- US 11313053 B
- CN 111910291 A